# EUROPÄISCHE PATENTSCHRIFT

(11) **EP 1 165 355 B1**
(45) Veröffentlichungstag und Bekanntmachung des Hinweises auf die Patenterteilung: **02.05.2003**
(21) Anmeldenummer: 00916761.0
(22) Anmeldetag: 24.02.2000
(51) Int. Cl.: B61K 9/00, G01M 17/08

(54) **VERFAHREN UND EINRICHTUNG ZUM ÜBERWACHEN EINES FAHRZEUGES**
METHOD AND DEVICE FOR MONITORING A VEHICLE
PROCEDE ET DISPOSITIF POUR SURVEILLER UN VEHICULE

(30) Priorität: 01.03.1999 DE 19908850
(43) Veröffentlichungstag der Anmeldung: 02.01.2002
(73) Patentinhaber: SIEMENS AKTIENGESELLSCHAFT, 80333 München (DE)
(72) Erfinder: EINZMANN, Klaus, D-91350 Gremsdorf (DE)
(86) Internationale Anmeldenummer: DE0000529
(87) Internationale Veröffentlichungsnummer: WO00051868

(56) Entgegenhaltungen:
- DE-A- 2 507 645
- US-A- 3 921 945
- US-A- 3 929 308
- US-A- 5 433 111

## Beschreibung

Die Erfindung betrifft ein Verfahren und eine Einrichtung zum Überwachen eines Fahrzeugs mit vom Fahrweg abhängigem Fahrzustand, insbesondere eines spurgebundenen Fahrzeugs, gemäß den im Oberbegriff von Anspruch 1 und Anspruch 8 definierten Merkmalen, wie sie beispielweise aus der US-5,433,111 bekannt sind.

Ein solches Fahrzeug kann jedes beliebige Fahrzeug sein, sofern es in zeitlichen Abständen den gleichen Fahrweg wie zuvor oder zumindest einen gleichartigen Fahrweg benutzt. In der Regel handelt es sich dabei um ein spurgebundenes Fahrzeug, insbesondere um einen Eisenbahnzug.

Das Fahrverhalten eines solchen Fahrzeugs hängt nicht nur von seinem technischen Zustand, sondern auch von seinem Fahrzustand, z.B. von der Fahrgeschwindigkeit bzw. von der Beschleunigung, und auch vom Ort des Fahrzeugs ab. Das Fahrverhalten eines Zuges in einem Tunnel ist beispielsweise anders als außerhalb eines Tunnels. Außerdem sind Einflüsse durch Weichen oder andere Besonderheiten des Fahrweges zu erwarten.

Bisher ist noch kein Verfahren bekannt, mit dem der Fahrzustand eines solchen Fahrzeugs, das insbesondere ein Eisenbahnzug ist, zuverlässig so untersucht werden könnte, dass ein unzulässiger Betriebszustand während der Fahrt frühzeitig zu erkennen wäre.

Der Erfindung liegt die Aufgabe zugrunde, ein geeignetes Verfahren zum Überwachen eines Fahrzeugs anzugeben, mit dem ein Defekt rechtzeitig bevor ein größerer Schaden eintreten kann, erkannt wird. Es soll auch eine dazu geeignete Einrichtung angegeben werden.

Die Aufgabe wird hinsichtlich des Verfahrens gemäß der Erfindung dadurch gelöst, dass für einen ersten Kennwert eine oder mehrere belastungsabhängige Größen am Fahrzeug gemessen werden, dass für einen zweiten Kennwert der Fahrzustand des Fahrzeugs bestimmt wird, dass für einen dritten Kennwert der Ort, an dem sich das Fahrzeug befindet, bestimmt wird, dass aus den drei Kennwerten ein aktueller Kennwert bestimmt wird, dass der aktuelle Kennwert mit einem repräsentativen Kennwert verglichen wird, der mit einem neuwertigen oder funktionssicheren Fahrzeug bei bekanntem Fahrzustand an einem bekannten Fahrweg ermittelt worden ist, und dass eine Meldung abgeben wird, wenn der aktuelle Kennwert um mehr als einen Schwellwert vom repräsentativen Kennwert abweicht.

Mit dem Verfahren nach der Erfindung wird der Vorteil erzielt, dass nicht nur die belastungsabhängigen Größen, die unmittelbar auf einen Defekt zurückgehen können, ermittelt werden, sondern auch der Fahrzustand, z.B. die Geschwindigkeit, und auch der Ort, an dem sich das Fahrzeug befindet. Mit der Bildung des aktuellen Kennwertes werden dann Einflüsse des Fahrzustandes und des Ortes auf eine belastungsabhängige Größe berücksichtigt. Falls die belastungsabhängige Größe der Relativweg eines gefederten Rades relativ zu seiner Aufhängung ist, kann eine Änderung dieser Größe nämlich außer auf einen Defekt auch auf die Geschwindigkeit, insbesondere aber auf die Beschleunigung des Fahrzeugs, die den Fahrzustand widerspiegeln, zurückzuführen sein. Änderungen des Relativweges können aber auch vom Ort des Fahrzeugs abhängen. So ist z.B. dann, wenn ein Zug über eine Weiche fährt, stets mit einem größeren Federweg am Rad als sonst zu rechnen.

Mit dem Verfahren nach der Erfindung werden vorteilhafterweise die Einflüsse des Fahrzustandes und des Ortes auf die Messung beseitigt. Dadurch kann beim Überschreiten eines Schwellwertes eindeutig auf eine unzulässige Änderung, z.B. auf einen Defekt, geschlossen werden. So kann z.B. bei einem zu großen aktuellen Kennwert für den Relativweg eines Rades relativ zu seiner Aufhängung eindeutig auf eine Entgleisung oder auf einen mechanischen Schaden am Fahrwerk geschlossen werden.

Der aktuelle Kennwert zeichnet sich dadurch aus, dass er die Einflüsse des Fahrzustandes und des Ortes berücksichtigt. Auch der repräsentative Kennwert, mit dem der aktuelle Kennwert verglichen wird, muss die genannten Einflüsse berücksichtigen. Um einen repräsentativen Kennwert als Referenzwert oder Sollwert zu bekommen, muss also nicht nur die belastungsabhängige Größe, z.B. ein Relativweg, eine Bauteilbeschleunigung, eine Biegung, eine Torsion und/oder eine Dehnung, an einem neuwertigen oder funktionssicheren Fahrzeug gemessen werden. Es müssen solche Messungen vielmehr bei unterschiedlichen Fahrzuständen und an unterschiedlichen Orten erfolgen. Dabei reicht es in der Regel aus, Messreihen bei unterschiedlichen Geschwindigkeiten und Beschleunigungen vorzunehmen und diese Messreihen an verschiedenen charakteristischen Orten zu wiederholen. Charakteristische Orte für ein Schienenfahrzeug sind z.B. eine Weiche, eine Kurve oder ein Tunnel.

Wenn ein Zug z.B. mit einer hohen Geschwindigkeit in einen Tunnel hineinfährt, wird zum Vergleich ein repräsentativer Kennwert für genau diesen Zustand herangezogen. Entsprechendes gilt, wenn der Zug z.B. mit niedriger Geschwindigkeit über eine Weiche fährt.

Mit dem Verfahren nach der Erfindung wird der Vorteil erzielt, dass über die gesamte Fahrtstrecke eines Fahrzeugs ein unzulässige Veränderung stets zuverlässig erkannt werden kann.

Die belastungsabhängige Größe wird beispielsweise am Fahrwerk des Fahrzeugs gemessen. Das Fahrwerk ist störungsanfälliger als andere Teile des Fahrzeugs. Man erhält so zuverlässige Hinweise auf den Zustand des Fahrzeugs. Die belastungsabhängige Größe kann aber auch am Wagenaufbau des Fahrzeugs gemessen werden.

Am Fahrwerk kann beispielsweise ein Beschleunigungsaufnehmer angebracht sein, der Biegungen und Torsionen messen kann. An Rädern können rotatorische Beschleunigungsaufnehmer vorhanden sein. Zwischen einem Rad und seiner Aufhängung kann ein Relativwegaufnehmer angeordnet sein. Eine plötzliche Vergrößerung des dort gemessenen Relativweges läßt auf eine Entgleisung eines SchienenFahrzeugs schließen, weil dann die Federung stärker ausgelenkt wird. Zum Bestimmen von Dehnungen können am Fahrzeug, insbesondere an dessen Fahrwerk, Dehnungsmessstreifen angeordnet sein, die auch für hohe Temperaturen ausgelegt werden können. An schnell rotierenden Teilen können Temperaturmesser angeordnet sein. Möglich ist auch das Anbringen eines Abstandsensors, der z.B. ein Wirbelstromsensor ist, und den Abstand des Fahrzeugs zum Fahrweg, z.B. zur Schiene oder zu den Schwellen, misst. Eine Änderung dieses Abstandes oder auch eine deutliche Schwankung des Abstandes lassen auf eine Entgleisung schließen.

Mehrere belastungsabhängige Größen werden z.B. für einen ersten Kennwert gesammelt und als Spektrum gespeichert. Dabei sind die Messzeitpunkte auf der Abszisse und die Messwerte auf der Ordinate aufgetragen. Entsprechendes erfolgt für den Fahrzustand (zweiter Kennwert) und für den Ort (dritter Kennwert). Aus den drei Spektren erhält man ein Spektrum für den Verlauf des aktuellen Kennwerts.

Entsprechende Spektren wurden zuvor in einem eindeutig ungestörten Zustand für verschiedene Fahrzustände und Orte ermittelt und als Spektren der repräsentativen Kennwerte gespeichert. Verglichen wird dann das aktuelle Spektrum mit einem repräsentativen Spektrum für den gleichen Fahrzustand und den gleichen Ort.

Es können auch mehrere belastungsabhängige Größen gemessen werden, aus denen nach einer Datenreduktion der erste Kennwert bestimmt wird, der trotzdem alle diese Größen berücksichtigt. Damit wird der Vorteil erzielt, dass man mit weniger Speicherplatz auskommt.

Geeignete Verfahren, die als solche bekannt sind, und zu einer Datenreduktion führen, sind z.B. das Bilden von Effektivwerten, RMS-Werten, Spitzenwerten und/oder Amplitudenhäufigkeitsverteilungen.

Eine belastungsabhängige Größe ist z.B. die Biegung oder die Torsion am Fahrwerk, die Relativbewegung zwischen zwei Teilen des Fahrzeugs, die Temperatur an einem Teil des Fahrzeugs oder der Abstand des Fahrzeugs vom Fahrweg.

Der Fahrzustand ist beispielsweise die Geschwindigkeit oder die Beschleunigung des Fahrzeugs selbst. Sie können fortlaufend in bekannter Weise ermittelt werden. Wichtig ist, dass zum Vergleich stets ein repräsentativer Kennwert herangezogen wird, der an einem neuwertigen Fahrzeug bei vergleichbarer Geschwindigkeit oder Beschleunigung ermittelt wurde.

Es muss auch stets ein repräsentativer Kennwert herangezogen werden, der an einem gleichwertigen Ort wie die Messung ermittelt wurde. Ein solcher Ort kann bei einem Schienenfahrzeug z.B. eine Weiche sein. Es kann sogar auch ein entgegenkommendes Fahrzeug einen besonderen Ort definieren.

Es ist folglich notwendig, dass während der gesamten Überwachung der Ort des Fahrzeugs stets bekannt ist. Nur so kann gewährleistet sein, dass der richtige repräsentative Kennwert herangezogen wird.

Der Ort des Fahrzeugs wird beispielsweise durch ein Ortungssystem bestimmt. Solche Ortungssysteme sind als solche bekannt. Das auch für Kraftfahrzeuge eingesetzte Satellitenortungssystem GPS kann den Ort zu jeder Zeit eindeutig bestimmen.

Eine andere Möglichkeit besteht darin, dass bei einem Schienenfahrzeug das gesamte Schienennetz in einem Computer abgespeichert ist, und dass mit diesen Informationen aus dem Abfahrtsort, der Abfahrtszeit, dem Geschwindigkeitsverlauf und aus dem momentanen Zeitpunkt der genaue Ort des Fahrzeugs ermittelt wird.

Mit dem Verfahren nach der Erfindung können Defekte an Fahrzeugen, die stets ähnliche Strecken befahren, insbesondere an Eisenbahnzügen, so frühzeitig erkannt werden, dass das Fahrzeug, bevor ein größerer Folgeschaden eintritt, angehalten werden kann.

Die Aufgabe, eine geeignete zuverlässige Einrichtung anzugeben, wird gemäß der Erfindung dadurch gelöst, dass am Fahrzeug ein oder mehrere Sensoren für eine oder mehrere belastungsabhängige Größen und ein oder mehrere Sensoren für den Fahrzustand und ein Ortungssystem vorhanden sind, und dass eine Recheneinheit vorhanden ist, die eingangsseitig mit den Sensoren und dem Ortungssystem und ausgangsseitig mit einer Vergleichseinheit verbunden ist, die eingangsseitig auch mit einem Speicher für repräsentative Kennwerte in Verbindung steht und einen Signalausgang hat.

Aus den während des Überwachungsvorgangs gemessenen Größen wird in der Recheneinheit ein aktueller Kennwert bestimmt. Dieser wird dann in der Vergleichseinheit mit dem repräsentativen Kennwert verglichen. Falls der aktuelle Kennwert um mehr als einen Schwellwert vom respräsentativen Kennwert abweicht, kann ein mit der Vergleichseinheit verbundener Signalgeber aktiviert werden, so dass der Fahrzeugführer auf den Defekt aufmerksam wird. Es kann jedoch auch sofort eine Bremse aktiviert werden.

Der Speicher für die repräsentativen Kennwerte steht in der Regel eingangsseitig ebenfalls mit der Recheneinheit in Verbindung und erhält von dort die unter definierten Bedingungen an funktionstüchtigen Fahrzeugen bestimmten repräsentativen Kennwerte.

Ein Sensor für eine belastungsabhängige Größe kann z.B. ein Dehnungsmesser (Dehnungsmessstreifen), ein Beschleunigungsaufnehmer, ein Abstandssensor oder ein Wirbelstromprüfsensor sein. Diese können Biegungen, Torsionen, Relativwege zwischen Fahrzeugteilen und Abstände zwischen Fahrzeug und Fahrweg messen. Sie können z.B. am Fahrwerk angeordnet sein. Ein Sensor für den Fahrzustand kann z.B. ein Beschleunigungsmesser sein. Als Ortungssystem eignet sich beispielsweise das bereits genannte Satellitenortungssystem GPS. Auch eine Einrichtung, bei der das gesamte Schienennetz abgespeichert ist und aus dem bekannten Abfahrtsort, der Abfahrtszeit, dem Geschwindigkeitsverlauf und dem momentanen Zeitpunkt der momentane Ort des Fahrzeugs bestimmbar ist, kann als Ortungssystem dienen.

Mit der Einrichtung nach der Erfindung können, wie auch mit dem Verfahren, Defekte an Fahrzeugen, die stets ähnliche Strecken befahren, insbesondere an Eisenbahnzügen, so frühzeitig erkannt werden, dass das Fahrzeug, bevor ein größerer Folgeschaden eintritt, angehalten werden kann. Äußere Einflüsse aufgrund des Fahrzustands oder des Ortes stören die Überwachung des Fahrzeugs nicht.

Ein Ausführungsbeispiel für das Verfahren und die Einrichtung zum Überwachen eines Fahrzeugs nach der Erfindung wird anhand der Zeichnung näher erläutert:
FIG 1 zeigt einen schematischen Aufbau einer Einrichtung oder ein Ablaufdiagramm für das Verfahren.
FIG 2 zeigt ein Beispiel für die Anordnung von Sensoren im Bereich des Rades eines Fahrzeugs.

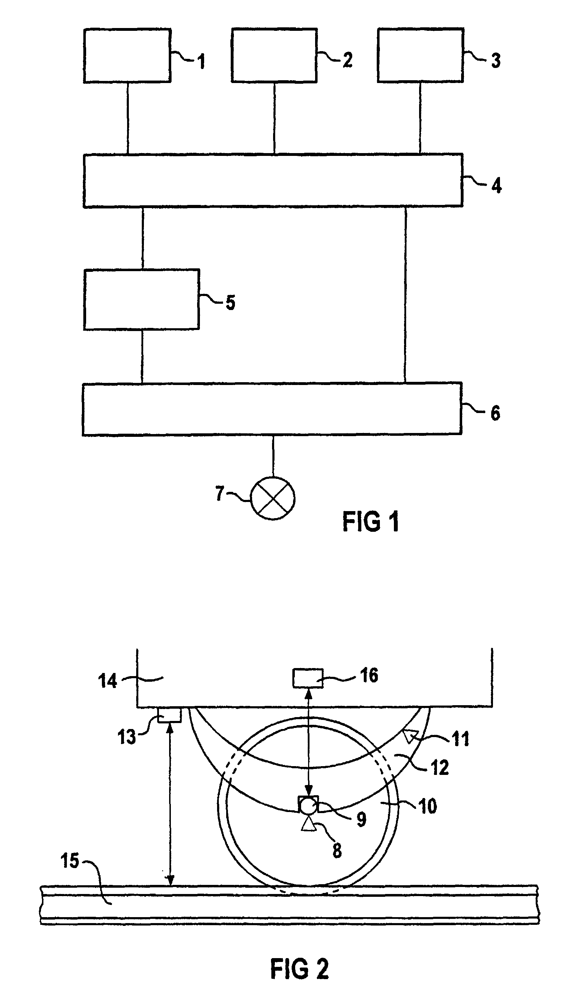

Die Einrichtung zur Durchführung des Verfahrens nach der Erfindung, mit dem ein Fahrzeug, insbesondere ein spurgebundenes Fahrzeug überwacht werden soll, weist nach Figur 1 zwei Arten von Sensoren 1, 2 und ein Ortungssystem 3 auf. Die erste Art von Sensoren 1 misst belastungsabhängige Größen. Es ist einer in der Regel aber sind mehrere Sensoren 1 dieser Art vorgesehen. Es kann sich dabei um Dehnungsmessstreifen, Temperatursensoren, Beschleunigungsaufnehmer, Abstandssensoren etc. handeln. Die mit diesen Sensoren 1 gemessenen belastungsabhängigen Größen zeichnen sich dadurch aus, dass sie einen Hinweis auf den technischen Zustand des Fahrzeugs geben.

Die zweite Art von Sensoren 2 bestimmt den Fahrzustand, d.h. es wird z.B. die Geschwindigkeit oder die Beschleunigung des Fahrzeugs gemessen.

Außerdem ist ein Ortungssystem 3 vorhanden, mit dem jederzeit festgestellt werden kann, wo sich das Fahrzeug befindet. Es kann sich dabei um ein Satellitenortungssystem handeln. Mit einem solchen System werden Hinweise darauf gewonnen, ob sich das Fahrzeug, insbesondere ein Eisenbahnzug, auf einem besonderen Abschnitt des Fahrweges, wie z.B. in einem Tunnel oder auf einer Weiche, befindet.

Die Sensoren 1, 2 und das Ortungssystem 3 stehen mit einer Recheneinheit 4 in Verbindung, in der ein Kennwert berechnet wird. Der Kennwert fasst die Signale der Sensoren 1 und 2 und des Ortungssystemes 3 zusammen und wird z.B. als Spektrum dargestellt. Die Datenmenge kann durch geeignete Maßnahmen komprimiert werden.

Bevor die Überwachung von Fahrzeugen beginnen kann, werden repräsentative Kennwerte ermittelt. Dazu werden mit Sensoren 1 die belastungsabhängigen Größen an einem funktionsfähigen Fahrzeug für bestimmte Fahrzustände (Sensoren 2) und für bestimmte Orte (Ortungssystem 3) gemessen. Die daraus in der Recheneinheit 4 berechneten repräsentativen Kennwerte werden in einem Speicher 5 abgelegt und stehen später einer Vergleichseinheit 6 zur Verfügung. Dieser Vergleichseinheit 6 werden auch die aktuellen Kennwerte, die beim Überwachen des Fahrzeugs bestimmt werden, zugeleitet. In der Vergleichseinheit 6 wird dann ermittelt, ob der aktuelle Kennwert um mehr als einen Schwellwert vom gespeicherten repräsentativen Kennwert abweicht. Dazu werden z.B. Spektren verglichen. Falls eine Abweichung festgestellt wird, wird ein der Vergleichseinheit 6 nachgeschalteter Signalgeber 7 aktiviert, der den Fahrzeugführer informiert. Es kann auch statt eines Signalgebers 7 direkt eine Bremse aktiviert werden.

Figur 2 zeigt Möglichkeiten zur Anordnung von Sensoren 1, die belastungsabhängige Größen messen, am Fahrwerk eines EisenbahnFahrzeugs. Geeignete Sensoren 1 sind z.B. ein Temperatursensor 8 an der Achse 9 eines Rades 10, die sich bei einer Störung stark erhitzen kann, oder ein Dehnungsmesser 11 an der Feder 12 des Radlagers. Es kann auch ein Abstandssensor 13 am Radkasten 14 so angebracht sein, dass er stets den Abstand zum Fahrweg, insbesondere zur Schiene 15, bestimmt. Außerdem kann ein zusätzlicher Abstandssensor 16 am Radkasten 14 so angeordnet sein, dass er den Abstand zwischen Radkasten 14 und Rad 10 misst. Auf diese Weise kann eine Entgleisung leicht festgestellt werden, da dann durch den unebenen Fahrweg das federnd gelagerte Rad 10 stark ausgelenkt wird.

Mit dem Verfahren und der Vorrichtung nach der Erfindung kann ein Defekt zuverlässig erkannt werden, wobei Fehlmessungen ausgeschlossen werden, die z.B. auf eine hohe Beschleunigung des Fahrzeugs oder auf das Überfahren einer Weiche zurückzuführen sind.

## Patentansprüche

1. Verfahren zum Überwachen eines Fahrzeugs mit vom Fahrweg abhängigem Fahrzustand, insbesondere eines spurgebundenen Fahrzeugs, wobei für einen ersten Kennwert der Fahrzustand des Fahrzeugs bestimmt wird und wobei für einen zweiten Kennwert der Ort, an dem sich das Fahrzeug befindet, bestimmt wird
**dadurch gekennzeichnet, dass** für einen dritten Kennwert eine oder mehrere belastungsabhängige Größen am Fahrzeug gemessen werden, dass aus den drei Kennwerten ein aktueller Kennwert bestimmt wird, dass der aktuelle Kennwert mit einem repräsentativen Kennwert verglichen wird, der mit einem neuwertigen oder funktionssicheren Fahrzeug bei bekanntem Fahrzustand an einem bekannten Fahrweg ermittelt worden ist, und dass eine Meldung abgegeben wird, wenn der aktuelle Kennwert um mehr als einen Schwellwert vom repräsentativen Kennwert abweicht.

2. Verfahren nach Anspruch 1,
**dadurch gekennzeichnet, dass** die belastungsabhängige Größe am Fahrwerk gemessen wird.

3. Verfahren nach einem der Ansprüche 1 oder 2,
**dadurch gekennzeichnet, dass** mehrere belastungsabhängige Größen gemessen werden und aus diesen nach einer Datenreduktion der erste Kennwert bestimmt wird.

4. Verfahren nach Anspruch 3,
**dadurch gekennzeichnet, dass** aus mehreren belastungsabhängigen Größen zur Datenreduktion ein Effektivwert und/oder ein RMS-Wert bestimmt wird.

5. Verfahren nach einem der Ansprüche 1 bis 4,
**dadurch gekennzeichnet, dass** eine belastungsabhängige Größe die Biegung oder die Torsion am Fahrwerk, die Relativbewegung zwischen zwei Teilen des Fahrzeugs, die Temperatur an einem Teil des Fahrzeugs oder der Abstand des Fahrzeugs vom Fahrweg ist.

6. Verfahren nach einem der Ansprüche 1 bis 5,
**dadurch gekennzeichnet, dass** der Fahrzustand die Geschwindigkeit oder die Beschleunigung des Fahrzeugs ist.

7. Verfahren nach einem der Ansprüche 1 bis 6,
**dadurch gekennzeichnet, dass** der Ort des Fahrzeugs durch ein Ortungssystem (3) bestimmt wird.

8. Einrichtung zum Überwachen eines Fahrzeugs mit vom Fahrweg abhängigem Fahrzustand, insbesondere eines spurgebundenen Fahrzeugs, wobei am Fahrzeug ein oder mehrere Sensoren (2) für den Fahrzustand und ein Ortungssystem (3) vorhanden sind,
**dadurch gekennzeichnet, dass** am Fahrzeug ein oder mehrere Sensoren (1) für eine oder mehrere belastungsabhängige Größen vorhanden sind, und dass eine Recheneinheit (4) vorhanden ist, die eingangsseitig mit den Sensoren (1, 2) und dem Ortungssystem (3) und ausgangsseitig mit einer Vergleichseinheit (6) verbunden ist, die eingangsseitig auch mit einem Speicher (5) für repräsentative Kennwerte in Verbindung steht und einen Signalausgang hat.

9. Einrichtung nach Anspruch 8,
**dadurch gekennzeichnet, dass** der Speicher (5) eingangsseitig ebenfalls mit der Recheneinheit (4) in Verbindung steht.

10. Einrichtung nach einem der Ansprüche 8 oder 9,
**dadurch gekennzeichnet, dass** ein Sensor (1) für eine belastungsabhängige Größe ein Dehnungsmesser (11), ein Beschleunigungsaufnehmer, ein Abstandssensor (13, 16) oder ein Wirbelstromprüfsensor ist.

11. Einrichtung nach einem der Ansprüche 8 bis 10,
**dadurch gekennzeichnet, dass** ein Sensor (2) für den Fahrzustand ein Beschleunigungsmesser ist.

12. Einrichtung nach einem der Ansprüche 8 bis 11,
**dadurch gekennzeichnet, dass** das Ortungssystem (3) ein Satellitenortungssystem ist.

## Claims

1. Method for monitoring a vehicle with a travelling state dependent on a rail, especially a vehicle using a track, the travelling state of the vehicle being determined for a first characteristic value, and the location of the vehicle being determined for a second characteristic value,
**characterized in that** one or more load-dependent variables on the vehicle are measured for a third characteristic value, **in that** a current characteristic value is determined from the three characteristic values, **in that** the current characteristic value is compared with a representative characteristic value which has been determined using a new-value or functionally reliable vehicle in a known travelling state on a known track, and **in that** a message is output if the current characteristic value differs from the representative characteristic value by more than a threshold value.

2. Method according to Claim 1, **characterized in that** the load-dependent variable is measured on the travelling gear.

3. Method according to either of Claims 1 and 2, **characterized in that** a number of load-dependent variables are measured and the first characteristic value is determined from these after data reduction.

4. Method according to Claim 3, **characterized in that** an effective value and/or an RMS value is determined for data reduction from a number of load-dependent variables.

5. Method according to one of Claims 1 to 4, **characterized in that** a load-dependent variable is bending or torsion at the travelling gear, the relative movement between two parts of the vehicle, the temperature on one part of the vehicle or the distance between the vehicle and the track.

6. Method according to one of Claims 1 to 5, **characterized in that** the travelling state is the speed or the acceleration of the vehicle.

7. Method according to one of Claims 1 to 6, **characterized in that** the location of the vehicle is determined by a position-finding system (3).

8. Device for monitoring a vehicle with a travelling state dependent on the track, especially a vehicle using a track, one or more sensors (2) for the travelling state and a position-finding system (3) being provided on the vehicle, **characterized in that** one or more sensors (1) for one or more load-dependent variables are provided on the vehicle, and **in that** a computing unit (4) is provided, where input is connected to the sensors (1, 2) and the position-finding system (3), and whose output is connected to a comparison unit (6), whose input of is also connected to a memory (5) for representative characteristic values and which has a signal output.

9. Device according to Claim 8, **characterized in that** the input of the memory (5) is also connected to the computing unit (4).

10. Device according to either of Claims 8 and 9, **characterized in that** a sensor (1) for a load-dependent variable is a strain gauge (11), an acceleration sensor, a distance sensor (13, 16) or an eddy-current test sensor.

11. Device according to one of Claims 8 to 10, **characterized in that** a sensor (2) for the travelling state is an accelerometer.

12. Device according to one of Claims 8 to 11, **characterized in that** the position-finding system (3) is a satellite navigation system.

## Revendications

1. Procédé pour la surveillance d'un véhicule ayant un état de déplacement dépendant du trajet, notamment un véhicule guidé, dans lequel on détermine l'état de déplacement du véhicule pour une première valeur caractéristique et dans lequel on détermine le lieu où se trouve le véhicule pour une deuxième valeur caractéristique,
**caractérisé par le fait qu'**on mesure sur le véhicule une ou plusieurs grandeurs dépendantes de la charge pour une troisième valeur caractéristique, qu'on détermine une valeur caractéristique actuelle à partir des trois valeurs caractéristiques, qu'on compare la valeur caractéristique actuelle à une valeur caractéristique représentative, qui a été déterminée avec un véhicule à l'état neuf ou au fonctionnement sûr pour un état de déplacement connu sur un trajet connu, et qu'on fournit un message lorsque la valeur caractéristique actuelle s'écarte de plus d'une valeur de seuil de la valeur caractéristique représentative.

2. Procédé selon la revendication 1,
**caractérisé par le fait qu'**on mesure la grandeur dépendante de la charge sur le bogie.

3. Procédé selon l'une des revendications 1 ou 2,
**caractérisé par le fait qu'**on mesure plusieurs grandeurs dépendantes de la charge et qu'on détermine la première valeur caractéristique à partir de celles-ci après une réduction de données.

4. Procédé selon la revendication 3,
**caractérisé par le fait qu'**on détermine une valeur effective et/ou RMS à partir de plusieurs grandeurs dépendantes de la charge en vue d'une réduction de données.

5. Procédé selon l'une des revendications 1 à 4,
**caractérisé par le fait qu'**une grandeur dépendante de la charge est la flexion ou la torsion sur le bogie, le mouvement relatif entre deux parties du véhicule, la température sur une partie du véhicule ou la distance entre le véhicule et la voie.

6. Procédé selon l'une des revendications 1 à 5,
**caractérisé par le fait que** l'état de déplacement est la vitesse ou l'accélération du véhicule.

7. Procédé selon l'une des revendications 1 à 6,
**caractérisé par le fait que** le lieu où se trouve le véhicule est déterminé par un système de localisation (3).

8. Dispositif pour la surveillance d'un véhicule ayant un état de déplacement dépendant du trajet, notamment un véhicule guidé, dans lequel il est prévu sur le véhicule un ou plusieurs capteurs (2) pour l'état de déplacement et un système de localisation (3),
**caractérisé par le fait qu'**il est prévu sur le véhicule un ou plusieurs capteurs (1) pour une ou plusieurs grandeurs dépendantes de la charge et qu'il est prévu une unité de calcul (4) qui est reliée en entrée aux capteurs (1, 2) et au système de localisation (3) et en sortie à une unité de comparaison (6) qui est aussi reliée en entrée à une mémoire (5) pour des valeurs caractéristiques représentatives et qui a une sortie de signal.

9. Dispositif selon la revendication 8,
**caractérisé par le fait que** la mémoire (5) est aussi reliée en entrée à l'unité de calcul (4).

10. Dispositif selon l'une des revendications 8 ou 9,
**caractérisé par le fait qu'**un capteur (1) pour une grandeur dépendante de la charge est un appareil mesureur d'allongement (11), un capteur d'accélération, un capteur de distance (13, 16) ou un capteur d'essai à courant de Foucault.

11. Dispositif selon l'une des revendications 8 à 10,
**caractérisé par le fait qu'**un capteur (2) pour l'état de déplacement est un dispositif de mesure d'accélération.

12. Dispositif selon l'une des revendications 8 à 11,
**caractérisé par le fait que** le système de localisation (3) est un système de localisation par satellite.
